# EUROPÄISCHE PATENTSCHRIFT

(11) **EP 3 288 804 B1**
(45) Veröffentlichungstag und Bekanntmachung des Hinweises auf die Patenterteilung: **05.06.2019**
(21) Anmeldenummer: 16716551.3
(22) Anmeldetag: 14.04.2016
(51) Int. Cl.: G01S 15/93, B60W 40/06, B60T 8/172, G01S 15/02, G01S 7/539, G01S 15/87, B60W 40/068

(54) **SENSORANORDNUNG ZUM ERKENNEN EINES ZUSTANDS EINER FAHRBAHN MIT EINEM ULTRASCHALLSENSOR, FAHRERASSISTENZSYSTEM, KRAFTFAHRZEUG SOWIE DAZUGEHÖRIGES VERFAHREN**
SENSOR ARRANGEMENT FOR DETECTING A STATE OF A ROADWAY USING AN ULTRASONIC SENSOR, A DRIVER ASSISTANCE SYSTEM, A MOTOR VEHICLE, AND AN ASSOCIATED METHOD
ENSEMBLE DE DÉTECTION POUR DÉTECTER L'ÉTAT D'UNE CHAUSSÉE, COMPRENANT UN DÉTECTEUR À ULTRASONS, SYSTÈME D'ASSISTANCE AU CONDUCTEUR, VÉHICULE À MOTEUR ET PROCÉDÉ ASSOCIÉ

(30) Priorität: 27.04.2015 DE 102015106408
(43) Veröffentlichungstag der Anmeldung: 07.03.2018
(73) Patentinhaber: Valeo Schalter und Sensoren GmbH, 74321 Bietigheim-Bissingen (DE); Dr.Ing. H.C. F. Porsche Aktiengesellschaft, 70435 Stuttgart (DE)
(72) Erfinder: HOFMANN, Heiko, 74321 Bietigheim-Bissingen (DE); JUNG, Thomas, 74321 Bietigheim-Bissingen (DE); JACOBI, Stefan, 71032 Böblingen (DE); SCHMIEDEL, Bernhard, 70563 Stuttgart (DE); MAISE, Timo, 71642 Ludwigsburg (DE); WEBER, Natalie, 74321 Bieigheim-Bissingen (DE); SCHULER, Thomas, 74321 Bietigheim-Bissingen (DE)
(74) Vertreter: Hofstetter, Schurack & Partner
(86) Internationale Anmeldenummer: PCT/EP2016/058164
(87) Internationale Veröffentlichungsnummer: WO 2016/173847

(56) Entgegenhaltungen:
- WO-A1-2013/120706
- DE-A1- 4 213 221
- DE-A1- 19 543 137
- DE-A1- 19 745 684
- DE-A1-102004 016 900
- DE-A1-102005 023 696
- DE-A1-102012 221 518
- US-A- 5 521 594

## Beschreibung

Die vorliegende Erfindung betrifft eine Sensoranordnung zum Erkennen eines Zustands einer Fahrbahn, mit einer Sensoreinrichtung, welche dazu ausgelegt ist, während einer Fahrt des Kraftfahrzeugs auf der Fahrbahn ein Auftreffen von Wasser auf eine Radlaufverkleidung des Kraftfahrzeugs zu erfassen, und mit einer Steuereinrichtung zum Erkennen des Zustands der Fahrbahn anhand des mittels der Sensoreinrichtung erfassten Auftreffen des Wassers. Die Erfindung betrifft außerdem ein Fahrerassistenzsystem mit einer solchen Sensoranordnung. Ferner betrifft die vorliegende Erfindung ein Kraftfahrzeug mit einem solchen Fahrerassistenzsystem. Schließlich betrifft die vorliegende Erfindung ein Verfahren zum Erkennen eines Zustands einer Fahrbahn.

Das Interesse richtet sich vorliegend insbesondere auf Sensoranordnungen, welche dazu ausgelegt sind, einen Zustand einer Fahrbahn zu erkennen. Eine solche Sensoranordnung kann beispielsweise eine Sensoreinrichtung umfassen, mit welcher erkannt werden kann, ob die Fahrbahn trocken ist oder ob sich auf der Fahrbahn Wasser, Eis oder Schnee befindet. Anhand des Zustands der Fahrbahn kann der Reibungskoeffizient zwischen der Fahrbahn und den Reifen des Kraftfahrzeugs bestimmt werden. Diese Information kann von einem Fahrerassistenzsystem des Kraftfahrzeugs genutzt werden. Beispielsweise kann damit eine Informationsschnittstelle zum Fahrer angesteuert werden und/oder die Geschwindigkeit des Kraftfahrzeugs in Abhängigkeit von dem erkannten Zustand der Fahrbahn bzw. dem Reibungskoeffizienten angepasst werden. Ein solches Fahrerassistenzsystem kann auch eine Antriebsschlupfregelung oder ein elektronisches Stabilitätsprogramm sein, dem die Informationen bezüglich des Zustands der Fahrbahn zugeführt werden.

In diesem Zusammenhang beschreibt die DE 37 28 708 A1 ein Verfahren zur Erkennung des Reibbeiwerts zwischen einer Fahrbahn und dem Reifen eines Kraftfahrzeugs. Hierbei werden die Abrollgeräusche wenigstens eines Reifens mit einem Mikrofon aufgenommen und das aufgenommene Signal wird in der Frequenz analysiert. Aus dem Frequenzspektrum kann dann auf den Fahrbahnzustand geschlossen werden.

Darüber hinaus beschreibt die DE 100 09 911 C1 ein System zur Überwachung des Luftdrucks eines Kraftfahrzeugsreifens mittels eines Sensors, der in einem Luftvolumen einer Luftfeder angeordnet ist. In dem Luftvolumen entstehen aufgrund der Radschwingungen Schallschwingungen, die von dem Sensor aufgenommen werden. Der Sensor kann als Mikrofon oder als Drucksensor ausgebildet sein. Dabei werden die Radschwingungen als Körperschall über das Fahrwerk auf die Luftfeder übertragen. Hierbei kann der Sensor als Mikrofon oder als Drucksensor ausgebildet sein.

Weiterhin ist aus der DE 10 2008 014 513 A1 eine Vorrichtung zur Erfassung eines Abrollgeräusches eines Fahrzeugreifens bekannt. Die Vorrichtung umfasst einen Sensor, welcher zur Erfassung des Abrollgeräusches dient und welcher in einem Gehäuse angeordnet ist, welches schwingungsisoliert am Fahrzeug befestigt ist. Der Sensor ist bevorzugt als Mikrofon ausgebildet. Alternativ kann als der Sensor auch ein anderer geeigneter Messaufnehmer, beispielsweise ein Drucksensor oder ein Ultraschallsensor, eingesetzt werden.

Um das Erkennen des Auftretens einer Aquaplaninggefahr frühzeitig zu erkennen, schlägt die DE 10 2010 008 258 A1 ein Verfahren vor, bei dem streckenabschnittsbezogene Informationen hinsichtlich der Gefahr von Aquaplaning dem Kraftfahrzeug bereitgestellt werden. Zudem ist wenigstens eine Sensoreinrichtung zur Bestimmung einer nassen Fahrbahn vorgesehen. Bei Vorliegen eines Streckenabschnittes der Fahrstrecke mit Aquaplaninggefahr und der Detektion einer nassen Fahrbahn wird eine Assistenzfunktion zur Prävention von Aquaplaning durchgeführt.

Zudem ist aus der DE 10 2012 221 518 A1 ein Verfahren zur Ermittlung einer Straßenglätte bekannt. Hierbei wird sensorisch die von einem Rad des Fahrzeugs aufgeschleuderte Gischt erfasst. Aus der aufgeschleuderten Gischt wird eine Straßenglätte berechnet. Zur Erfassung der aufgeschleuderten Gischt kann beispielsweise ein Sensor verwendet werden, der als Tropfendetektor ausgebildet ist. Weiterhin kann ein Feuchtigkeitssensor oder ein Sensor zum kontaktlosen Erfassen bzw.

Zählen von aufgeschleuderten Partikeln verwendet werden. Mit dem Sensor können Wassertröpfchen, Schneeflocken, Eispartikel und/oder Schmutzpartikel erfasst werden.

Darüber hinaus ist in dem Artikel "Sensor Systems and Signal Processing for Advanced Driver Assistance" von K. Naab und R. Hoppstock, veröffentlicht auf dem Kongress "Smart Vehicles", 1995, ein Verfahren beschrieben, bei welchem das Wasser, welches auf eine Radlaufverkleidung auftrifft, mit einem Sensor erfasst wird. Ferner ist dort beschrieben, dass sich das Rauschen in dem Radkasten mit der Fahrzeuggeschwindigkeit, der Motorgeschwindigkeit und der Wasserhöhe auf der Fahrbahnoberfläche ändert. Dabei können die ersten beiden Faktoren leicht korrigiert werden, so dass nur der Anteil des Wassers, das auf die Radlaufverkleidung trifft, übrig bleibt. Das Rauschen kann mit einem Mikrofon gemessen werden. Dabei kann das Rauschen mit einem Bandpassfilter in einem Frequenzbereich zwischen 2,5 und 4,5 kHz gefiltert werden. Ferner kann das Rauschen in ein charakteristisches Gleichspannungsniveau umgerechnet werden, das mit der absoluten Wasserhöhe auf der Fahrbahnoberfläche korreliert. Weiterer Stand der Technik ist aus der DE 42 13 221 A1, DE 10 2005 023696 A1, DE 195 43 137 A1, DE 10 2004 016900 A1, US 5 521 594 A und der DE 197 45 684 A1 bekannt.

Es ist Aufgabe der vorliegenden Erfindung, eine Lösung aufzuzeigen, wie eine Sensoranordnung zum Erkennen eines Zustands einer Fahrbahn der eingangs genannten Art kostengünstiger und robuster bereitgestellt werden kann.

Diese Aufgabe wird erfindungsgemäß durch eine Sensoranordnung sowie durch ein Verfahren mit den Merkmalen gemäß der unabhängigen Patentansprüche 1 und 13 gelöst. Vorteilhafte Ausführungen der Erfindung sind Gegenstand der abhängigen Patentansprüche.

Der vorliegenden Erfindung liegt die Erkenntnis zugrunde, dass Mikrofone bzw. Körperschallmikrofone, mit denen das Auftreffen von Wasser auf die Radlaufverkleidung bestimmt wird, nicht für den dauerhaften Einsatz im Radkasten ausgelegt sind. Zudem sind derartige Mikrofone zu teuer für einen Serieneinsatz im Kraftfahrzeug. Anstelle von Mikrofonen wird nun eine Sensoreinrichtung verwendet, welche einen Ultraschallsensor aufweist. Derartige Ultraschallsensoren werden beispielsweise im Zusammenhang mit Parkhilfe-Systemen in Kraftfahrzeugen verwendet. Der Ultraschallsensor kann dazu ausgebildet sein, ein Ultraschallsignal auszusenden. Zu diesem Zweck wird mit einem entsprechenden Wandlerelement eine Membran des Ultraschallsensors in mechanische Schwingungen versetzt. Das Ultraschallsignal kann beispielsweise eine Frequenz von etwa 50 kHz aufweisen. Ferner kann mit dem Ultraschallsensor das von einem Objekt in einem Umgebungsbereich des Kraftfahrzeugs reflektierte Ultraschallsignal wieder empfangen werden. Hierzu wird mit dem Wandlerelement die Schwingung der Membran, welche durch das reflektierte Ultraschallsignal erzeugt wird, erfasst. Ein solcher Ultraschallsensor zeichnet sich durch seine geringen Anschaffungskosten sowie durch seine Robustheit gegenüber Umwelteinflüssen aus.

Der Ultraschallsensor kann in einem Bereich eines Radkastens bzw. eines Radhauses des Kraftfahrzeugs angeordnet sein. Der Radkasten beschreibt den Bereich des Kraftfahrzeugs, in welchem die Räder des Kraftfahrzeugs zumindest bereichsweise angeordnet sind. In dem Radkasten ist eine Radlaufverkleidung angeordnet. Diese Radlaufverkleidung ist einer Lauffläche des Rades bzw. des Reifens zumindest bereichsweise zugewandt. Die Radlaufverkleidung, die auch als Radkasteninnenverkleidung bezeichnet werden kann, kann aus einem Kunststoff gefertigt sein. Die Radlaufverkleidung ist insbesondere innerhalb des Radkastens bzw. des Radhauses angeordnet. Mit der Sensoreinrichtung bzw. mit dem Ultraschallsensor kann nun Wasser, welches auf die Radlaufverkleidung trifft, erfasst werden. Dabei können in dem Wasser auch Partikel, beispielsweise Schmutzpartikel, gelöst sein. Das Wasser kann auch teilweise gefroren sein. Wenn das Kraftfahrzeug auf der Fahrbahn bewegt wird, kann Wasser, welches sich auf der Oberfläche der Fahrbahn befindet, durch die Rotation des Rades des Kraftfahrzeugs auf die Radlaufverkleidung geschleudert werden. Das Wasser, welches sich auf der Fahrbahnoberfläche befindet, trifft dann als Wassertropfen oder als Spritzwasser bzw. Gischt auf die Radlaufverkleidung. Mit dem Ultraschallsensor kann insbesondere ein Ultraschallsignal empfangen werden, welches durch das Auftreffen des Wassers auf die Radlaufverkleidung entsteht. Somit kann mit der Sensoranordnung überprüft werden, ob sich Wasser auf der Oberfläche der Fahrbahn befindet. Auf diese Weise kann der Zustand der Fahrbahn bzw. der Fahrbahnoberfläche erkannt werden. Anhand des erkannten Zustands der Fahrbahn kann dann auf den Reibungskoeffizienten zwischen den Reifen bzw. den Rädern des Kraftfahrzeugs und der Fahrbahnoberfläche rückgeschlossen werden.

Gemäß der Erfindung ist der Ultraschallsensor derart angeordnet, dass das auf die Radlaufverkleidung auftreffende Wasser eine mechanische Schwingung einer Membran des Ultraschallsensors bewirkt. Insbesondere kann der Ultraschallsensor derart an oder in der Radlaufverkleidung angeordnet sein, dass mechanische Schwingungen von der Radlaufverkleidung durch Körperschall an die Membran des Ultraschallsensors übertragen werden können. Wenn Wasser bei der Fahrt des Kraftfahrzeugs von der Fahrbahnoberfläche auf die Radlaufverkleidung geschleudert wird, kann die Radlaufverkleidung in mechanische Schwingungen versetzt werden. Diese mechanische Schwingung kann dann mit dem Ultraschallsensor erfasst werden. Zudem kann durch das auf die Radlaufverkleidung auftreffende Wasser ein akustisches Signal erzeugt werden, welches die Membran in mechanische Schwingungen versetzt. Somit kann mit Hilfe eines handelsüblichen Ultraschallsensors überprüft werden, ob sich Wasser auf der Fahrbahnoberfläche befindet.

In einer weiteren Ausgestaltung ist die Membran des Ultraschallsensors zumindest teilweise aus einem Metall gebildet. Die Membran des Ultraschallsensors kann insbesondere vollständig aus einem Metall gebildet sein. Beispielsweise kann die Membran des Ultraschallsensors aus Aluminium gebildet sein. Die Membran des Ultraschallsensors kann insbesondere topfförmig ausgebildet sein. Die Membran des Ultraschallsensors kann mit einem Wandlerelement, beispielsweise einem piezoelektrischen Element, mechanisch gekoppelt sein. Mit dem Wandlerelement kann eine mechanische Schwingung der Membran erfasst werden. Ein Ultraschallsensor, der eine Membran aus einem Metall aufweist, zeichnet sich im Vergleich zu einem Mikrofon durch seine hohe Robustheit gegenüber Umwelteinflüssen, beispielsweise Steinschlag, Eis und/oder Schneematsch, aus.

In einer Ausführungsform ist der Ultraschallsensor auf einer einem Rad des Kraftfahrzeugs abgewandten Seite der Radlaufverkleidung angeordnet. Mit anderen Worten kann der Ultraschallsensor verdeckt hinter der Radlaufverkleidung angeordnet sein. Der Ultraschallsensor kann also auf einer Rückseite der Radlaufverkleidung angeordnet sein. Der Ultraschallsensor und insbesondere die Membran des Ultraschallsensors können mit der Radlaufverkleidung mechanisch gekoppelt sein. Der Ultraschallsensor kann mit einem entsprechenden Halteelement an der dem Rad abgewandten Seite der Radlaufverkleidung befestigt sein. Das Halteelement kann beispielsweise an die Radlaufverkleidung geklebt sein. Darüber hinaus kann an dem Ultraschallsensor und/oder an der Radlaufverkleidung ein Dämpfungselement angeordnet sein, welches verhindert, dass mechanische Schwingungen, die im Betrieb des Kraftfahrzeugs entstehen, an den Ultraschallsensor übertragen werden. Wenn der Ultraschallsensor verdeckt hinter der Radlaufverkleidung angeordnet ist, kann dieser besonders vor Umwelteinflüssen geschützt werden und somit zuverlässig betrieben werden.

In einer weiteren Ausgestaltung weist die Radlaufverkleidung eine Durchgangsöffnung auf und der Ultraschallsensor ist zumindest bereichsweise innerhalb der Durchgangsöffnung angeordnet. Die Radlaufverkleidung kann eine Durchgangsöffnung bzw. eine Bohrung aufweisen. In dieser Bohrung kann der Ultraschallsensor bzw. die Membran des Ultraschallsensors zumindest bereichsweise angeordnet sein. Somit kann mit dem Ultraschallsensor insbesondere ein Schallsignal innerhalb des Radkastens erfasst werden, welches dadurch entsteht, dass das Wasser auf die Radlaufverkleidung auftrifft. Somit kann mit Hilfe des Ultraschallsensors zuverlässig erfasst werden, ob sich Wasser auf der Fahrbahnoberfläche befindet.

Gemäß der Erfindung ist die Steuereinrichtung dazu ausgelegt, den Ultraschallsensor zum Erfassen des auf die Radlaufverkleidung auftreffenden Wassers in einem Empfangsmodus zu betreiben, in welchem ein Wandlerelement eine Schwingung einer Membran des Ultraschallsensors bestimmt. Handelsübliche Ultraschallsensoren können beispielsweise in einem Sendemodus, in dem sie das Ultraschallsignal aussenden, und in einem Empfangsmodus, in dem sie ein reflektiertes Ultraschallsignal bzw. ein Echosignal empfangen, betrieben werden. Vorliegend wird der Ultraschallsensor mittels der Steuereinrichtung in dem Empfangsmodus betrieben. In dem Empfangsmodus wird die Membran des Ultraschallsensors nicht zu mechanischen Schwingungen durch das Wandlerelement angeregt. In dem Empfangsmodus kann eine mechanische Schwingung der Membran mit Hilfe des Wandlerelements erfasst werden. Auf diese Weise kann ein handelsüblicher Ultraschallsensor dazu verwendet werden, einen Zustand der Fahrbahn zu erkennen.

Weiterhin ist es vorteilhaft, wenn das Wandlerelement dazu ausgelegt ist, ein Sensorsignal bereitzustellen, welches die Schwingung der Membran beschreibt, und die Steuereinrichtung dazu ausgelegt ist, das Sensorsignal zum Bestimmen des Zustands der Fahrbahn in einem Frequenzbereich zwischen 2 und 5 kHz und/oder in einem Frequenzbereich einer Resonanzfrequenz der Membran zu überprüfen. Insbesondere kann die Steuereinrichtung dazu ausgelegt sein, dass Sensorsignal zum Bestimmen des Zustands der Fahrbahn in einem Frequenzbereich zwischen 2,5 und 4,5 kHz zu überprüfen. Das Wandlerelement kann beispielsweise ein piezoelektrisches Element sein, das in Folge der Schwingung der Membran ein zeitlich veränderliches Spannungssignal als das Sensorsignal bereitstellt. Dieses Sensorsignal kann in dem Ultraschallsensor selbst oder mit Hilfe der Steuereinrichtung gefiltert werden. Das Sensorsignal kann so gefiltert werden, dass der Frequenzbereich zwischen 2 kHz und 5 kHz verstärkt wird. Zu diesem Zweck kann beispielsweise ein entsprechender Bandpassfilter verwendet werden. Alternativ oder zusätzlich kann das Sensorsignal im Bereich der Resonanzfrequenz des Ultraschallsensors beziehungsweise der Membran des Ultraschallsensors überprüft werden. Die Resonanzfrequenz der Membran kann beispielsweise 51,2 kHz sein. Somit kann die Anregung der Membran in ihrer Resonanzfrequenz, die durch das Auftreffen des Wasser bewirkt wird, erkannt werden. Ein handelsüblicher Ultraschallsensor, der beispielsweise bei einer Frequenz von ca. 50 kHz, insbesondere 51,2 kHz, betrieben wird, dazu genutzt werden, das Auftreffen von Wasser auf die Radlaufverkleidung zu erfassen.

Bevorzugt ist die Steuereinrichtung dazu ausgelegt, eine Menge des auf die Radkastenverkleidung auftreffenden Wassers zu bestimmen und eine Empfindlichkeit des Ultraschallsensors in Abhängigkeit von der bestimmten Menge anzupassen. Die Steuereinrichtung kann insbesondere das Sensorsignal, das mit dem Wandlerelement bereitgestellt wird, im Hinblick auf die Frequenz und/oder die Amplitude überprüfen. Wenn beispielsweise mit Hilfe des Ultraschallsensors erkannt wird, dass nur vereinzelt Wassertröpfchen auf die Radlaufverkleidung treffen, kann davon ausgegangen werden, dass die Menge des Wassers, die sich auf der Fahrbahnoberfläche befindet, verhältnismäßig gering ist. Wenn das Wasser in Form von Spritzwasser auf die Radlaufverkleidung trifft, kann davon ausgegangen werden, dass sich ein Wasserfilm auf der Fahrbahnoberfläche befindet. Der Ultraschallsensor kann nun mit Hilfe der Steuereinrichtung mit einer veränderlichen Empfindlichkeitsschwelle betrieben werden. Zum Anpassen der Empfindlichkeit des Ultraschallsensors kann eine Verstärkung des Sensorsignals angepasst werden. Ferner können nur die Teile des Sensorsignals berücksichtigt werden, welche einen vorbestimmten Schwellenwert überschreiten. Dieser Schwellenwert kann nun an den Anwendungsfall angepasst werden. Wenn beispielsweise einzelne Wassertropfen erkannt werden sollen, welche auf die Radlaufverkleidung treffen, kann ein verhältnismäßig geringer Schwellwert vorgegeben werden. Wenn Spritzwasser erkannt werden soll, kann der Schwellwert entsprechend erhöht werden.

Bevorzugt ist die Steuereinrichtung dazu ausgelegt, die Empfindlichkeit des Ultraschallsensors mit zunehmender Menge des Wassers zu verringern. Wenn der Schwellwert für das Sensorsignal beispielsweise gering eingestellt ist, kann dies dazu führen, dass beim Auftreten von Spritzwasser im Radkasten ein Verstärker, mit dem das Sensorsignal verstärkt wird, in Sättigung geht. Dies kann dazu führen, dass das Auftreffen von Wasser auf den Radlaufkasten nicht zuverlässig erfasst werden kann. Beispielsweise kann ein Wechsel zwischen einem Zustand, bei welchem Wasser auf die Radlaufverkleidung trifft, von einem Zustand, bei welchem kein Wasser auf die Radlaufverkleidung trifft, nicht oder nur verzögert erkannt werden. Um dies zu vermeiden, wird der Schwellwert und damit die Empfindlichkeit abhängig von dem Sensorsignal angepasst. Beispielsweise kann der Schwellwert abhängig von der Amplitude des Sensorsignals angepasst werden. Trotz der Anpassung der Empfindlichkeit kann aufgrund der Kenntnis des Schwellwerts weiterhin auf die Häufigkeit und die Stärke des auf die Radlaufverkleidung treffenden Wassers geschlossen werden.

Ein erfindungsgemäßes Fahrerassistenzsystem für ein Kraftfahrzeug umfasst eine erfindungsgemäße Sensoranordnung. Dabei kann die Sensoranordnung auch mehrere Sensoreinrichtungen umfassen, die mit der Steuereinrichtung zur Datenübertragung verbunden sind. Beispielsweise kann jedem Rad bzw. jedem Radkasten des Kraftfahrzeugs eine Sensoreinrichtung zugeordnet sein. Es kann auch vorgesehen sein, dass an oder in einem Radkasten mehrere Sensoren angeordnet sind.

Bevorzugt weist das Fahrerassistenzsystem zumindest einen weiteren Ultraschallsensor auf, welcher dazu ausgelegt ist, ein Objekt in einem Umgebungsbereich des Kraftfahrzeugs zu erfassen. Der weitere Ultraschallsensor kann beispielsweise in oder hinter einem Stoßfänger des Kraftfahrzeugs angeordnet sein. Es können auch mehrere weitere Ultraschallsensoren vorgesehen sein, die verteilt an den Stoßfängern des Kraftfahrzeugs angeordnet sind. Diese Ultraschallsensoren dienen dazu, ein Objekt in dem Umgebungsbereich des Kraftfahrzeugs zu erfassen. Insbesondere kann mit Hilfe der Ultraschallsensoren ein Abstand zwischen dem Kraftfahrzeug und dem Objekt bestimmt werden. Diese weiteren Ultraschallsensoren können Teil eines Parkhilfe-Systems, eines Totwinkel-Assistenten und/oder eines Abstandsregeltempomats sein.

Bevorzugt ist die Steuereinrichtung der Sensoranordnung mit dem zumindest einen weiteren Ultraschallsensor zur Datenübertragung verbunden. Dies bedeutet, dass für die Sensoranordnung und für ein Parkhilfe-System, einen Abstandsregeltempomat und/oder einen Totwinkel-Assistent eine einzige Steuereinrichtung genutzt werden kann. Diese Steuereinrichtung kann beispielsweise durch ein elektronisches Steuergerät (ECU - Electronic Control Unit) des Kraftfahrzeugs gebildet sein. Somit kann die Sensoranordnung besonders kostengünstig und Bauraum sparend bereitgestellt werden. In einer weiteren Ausgestaltung ist das Fahrerassistenzsystem dazu ausgelegt, eine Informationsschnittstelle zu einem Fahrer des Kraftfahrzeugs anzusteuern und/oder eine Geschwindigkeit des Kraftfahrzeugs in Abhängigkeit von dem mit der Sensoranordnung erfassten Zustand der Fahrbahn anzupassen. Wenn beispielsweise mit der Sensoranordnung erkannt wird, dass die Wassermenge, die sich auf der Fahrbahnoberfläche befindet, einen vorbestimmten Grenzwert überschreitet, kann beispielsweise mittels der Informationsschnittstelle eine Information und/oder Warnung an den Fahrer ausgegeben werden. Alternativ oder zusätzlich kann die Geschwindigkeit des Kraftfahrzeugs mit Hilfe des Fahrerassistenzsystems reduziert werden. Hierzu kann das Fahrerassistenzsystem einen Eingriff in die Bremsanlage des Kraftfahrzeugs durchführen. Durch die Reduzierung der Geschwindigkeit des Kraftfahrzeugs kann die Gefahr von Aquaplaning reduziert werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf die erfindungsgemäße Sensoranordnung vorgestellten bevorzugten Ausführungsformen und deren Vorteile gelten entsprechend für das erfindungsgemäße Fahrerassistenzsystem, das erfindungsgemäße Kraftfahrzeug sowie für das erfindungsgemäße Verfahren.

Weitere Merkmale der Erfindung ergeben sich aus den Ansprüchen. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches eine Sensoranordnung aufweist;
- Fig. 2: eine Sensoreinrichtung der Sensoranordnung, welche hinter einer Radlaufverkleidung des Kraftfahrzeugs angeordnet ist;
- Fig. 3: ein Diagramm, welches den Verlauf der Empfindlichkeit der Sensoreinrichtung in Abhängigkeit von einer Menge des Wassers, welche auf die Radlaufverkleidung auftrifft, beschreibt; und
- Fig. 4: Sensorsignale der Sensoreinrichtung, bei denen die Empfindlichkeit nicht angepasst ist, im Vergleich zu Sensorsignalen der Sensoreinrichtung, bei denen die Empfindlichkeit in Abhängigkeit von der Menge des Wassers angepasst ist.

In den Figuren werden gleiche und funktionsgleiche Elemente mit den gleichen Bezugszeichen versehen.

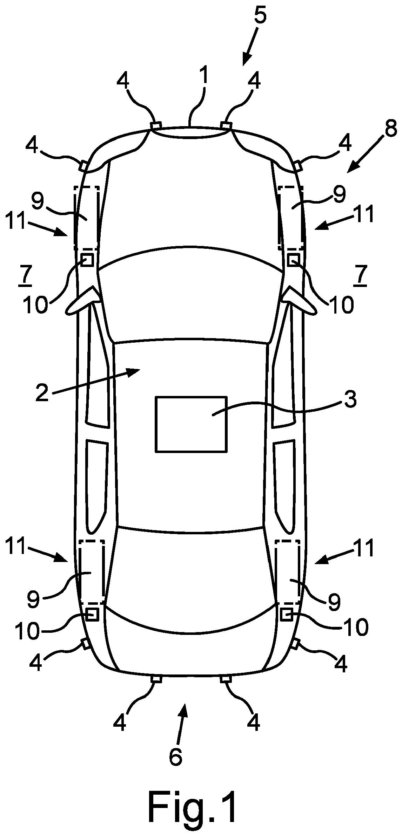

Fig. 1 zeigt ein Kraftfahrzeug 1 gemäß einer Ausführungsform der vorliegenden Erfindung in einer Draufsicht. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 dient zur Unterstützung des Fahrers beim Führen des Kraftfahrzeugs 1. Das Fahrerassistenzsystem 1 kann beispielsweise ein Parkhilfe-System, einen Totwinkel-Assistent und/oder einen Abstandsregeltempomat umfassen.

Das Fahrerassistenzsystem 2 umfasst eine Steuereinrichtung 3, die beispielsweise durch ein elektronisches Steuergerät des Kraftfahrzeugs 1 gebildet sein kann. Darüber hinaus umfasst das Fahrerassistenzsystem 2 eine Mehrzahl von Ultraschallsensoren 4. In dem vorliegenden Ausführungsbeispiel umfasst das Fahrerassistenzsystem 2 acht Ultraschallsensoren 4. Dabei sind vier Ultraschallsensoren 4 in einem Frontbereich 5 des Kraftfahrzeugs 1 und vier Ultraschallsensoren 4 in einem Heckbereich 6 des Kraftfahrzeugs 1 angeordnet. Die Ultraschallsensoren 4 können beispielsweise in den Stoßfängern oder verdeckt hinter den Stoßfängern angeordnet sein. Mit den Ultraschallsensoren 4 kann ein Objekt in einem Umgebungsbereich 7 des gesamten Kraftfahrzeugs 1 erfasst werden. Hierzu senden die Ultraschallsensoren 4 jeweils ein Ultraschallsignal aus und empfangen das von dem Objekt reflektierte Ultraschallsignal.

Die Ultraschallsensoren 4 sind zur Datenübertragung mit der Steuereinrichtung 3 verbunden. Entsprechende Datenleitungen sind vorliegend der Übersichtlichkeit halber nicht dargestellt. Anhand der mit den Ultraschallsensoren 4 empfangenen Messsignale kann die Position eines oder mehrerer Objekte in dem Umgebungsbereich 7 des Kraftfahrzeugs 1 erfasst werden. In Abhängigkeit davon kann mit der Steuereinrichtung 3 ein entsprechendes Steuersignal bereitgestellt werden, mit dem das Kraftfahrzeug 1 zumindest semi-autonom manövriert werden kann. Hierzu kann ein Eingriff in die Lenkung des Kraftfahrzeugs, in eine Bremsanlage und/oder in einen Antriebsmotor durchgeführt werden. Somit kann der Fahrer des Kraftfahrzeugs 1 beispielsweise bei einem Einparkvorgang unterstützt werden.

Das Fahrerassistenzsystem 2 umfasst ferner eine Sensoranordnung 8. Die Sensoranordnung 8 umfasst zumindest eine Sensoreinrichtung 10. In dem vorliegenden Ausführungsbeispiel umfasst die Sensoranordnung 8 vier Sensoreinrichtungen 10. Dabei ist jeweils eine Sensoreinrichtung 10 einem Rad 9 des Kraftfahrzeugs 1 zugeordnet. Die Sensoreinrichtungen 10 sind insbesondere den jeweiligen Radkästen 11 bzw. Radhäusern des Kraftfahrzeugs 1 zugeordnet. Mit den Sensoreinrichtungen 10 können Schallsignale und/oder mechanische Schwingungen in dem Radkasten 11 erfasst werden. Die Sensoreinrichtungen 10 sind zudem zur Datenübertragung mit der Steuereinrichtung 3 verbunden.

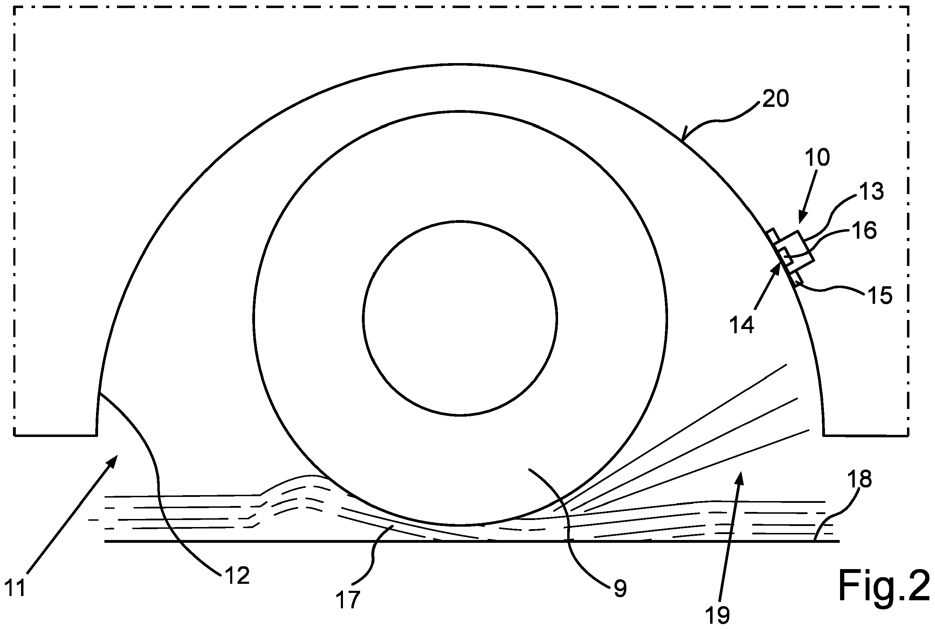

Fig. 2 zeigt eine ausschnittsweise Darstellung des Kraftfahrzeugs 1, wobei ein Radkasten 11 des Kraftfahrzeugs 1 zu sehen ist. Innerhalb des Radkastens 11 ist das Rad 9 des Kraftfahrzeugs 1 angeordnet. Der Radkasten 11 weist eine Radlaufverkleidung 12 auf, die beispielsweise aus einem Kunststoff gefertigt ist. Vorliegend ist zu erkennen, dass die Sensoreinrichtung 10 auf einer dem Rad 9 abgewandten Seite 20 der Radlaufverkleidung 12 angeordnet ist. Die Sensoreinrichtung 10 ist also verdeckt hinter der Radlaufverkleidung 12 angeordnet.

Die Sensoreinrichtung 10 umfasst einen Ultraschallsensor 13. Der Ultraschallsensor 13 kann baugleich zu den Ultraschallsensoren 4 ausgebildet sein. Der Ultraschallsensor 13 umfasst wiederum eine Membran 14. Diese Membran 14 kann beispielsweise topfförmig ausgebildet sein. Die Membran 14 kann eine Resonanzfrequenz von etwa 50 kHz, insbesondere 51,2 kHz, aufweisen. Die Membran 14 kann aus einem Metall, insbesondere Aluminium, gefertigt sein. Innerhalb der Membran 14 ist ein Wandlerelement 16 angeordnet, das beispielsweise durch ein piezoelektrisches Element gebildet sein kann. Das Wandlerelement 16 ist mechanisch mit der Membran 14 gekoppelt. Somit können Schwingungen der Membran 14 mit Hilfe des Wandlerelements 16 erfasst werden und als Sensorsignal, insbesondere in Form einer elektrischen Spannung, ausgegeben werden. Die Sensoreinrichtung 10 umfasst ferner ein Halteelement 15, mit dem der Ultraschallsensor 13 an der Rückseite 20 der Radlaufverkleidung 12 gehalten wird. Die Membran 14 des Ultraschallsensors 13 ist mechanisch mit der Radlaufverkleidung 12 gekoppelt.

Das Kraftfahrzeug 1 wird auf einer Fahrbahn 18 bzw. auf einer Fahrbahnoberfläche bewegt. Hierbei wird das Rad 9 des Kraftfahrzeugs 1 auf der Fahrbahn 18 abgerollt. Vorliegend befindet sich auf der Oberfläche der Fahrbahn 18 Wasser 17. Vorliegend ist der Fall des sogenannten Aquaplanings dargestellt, bei welchem das Rad 9 auf dem Wasser 17 aufschwimmt. In diesem Fall schiebt sich ein Wasserkeil unter die Reifenaufstandsfläche des Rads 9 und führt damit zum Verlust der Haftung. Wenn sich Wasser 17 auf der Oberfläche der Fahrbahn 18 befindet, wird dieses durch die Rotation des Rades 9 aufgeschleudert und trifft auf die Radlaufverkleidung 12. Dies ist vorliegend schematisch in einem Bereich 19 dargestellt. In Folge des Auftreffens des Wassers 17 auf die Radlaufverkleidung 12 entsteht ein Schallsignal innerhalb des Radkastens 11.

Zudem wird die Radlaufverkleidung 12 zu mechanischen Schwingungen angeregt. Das Schallsignal und/oder die mechanische Schwingung der Radlaufverkleidung 12 kann mit Hilfe der Sensoreinrichtung 10 bzw. des Ultraschallsensors 13 erfasst werden. Hierzu wird die mechanische Schwingung der Membran 14 mit Hilfe des Wandlerelements 16 erfasst. Mit dem Wandlerelement 16 kann dann das Sensorsignal an die Steuereinrichtung 3 übertragen werden. Anhand der Frequenz und/oder der Amplitude des Sensorsignals kann dann die Steuereinrichtung 3 die Menge des Wassers 17 bestimmen, das sich auf der Fahrbahn 18 befindet. Falls die Menge des Wassers 17 auf der Fahrbahn 18 einen vorbestimmten Grenzwert überschreitet, kann mit der Steuereinrichtung 3 ein Steuersignal ausgegeben werden, in Folge dessen die Geschwindigkeit des Kraftfahrzeugs 1 reduziert wird. Somit kann beispielsweise Aquaplaning verhindert werden.

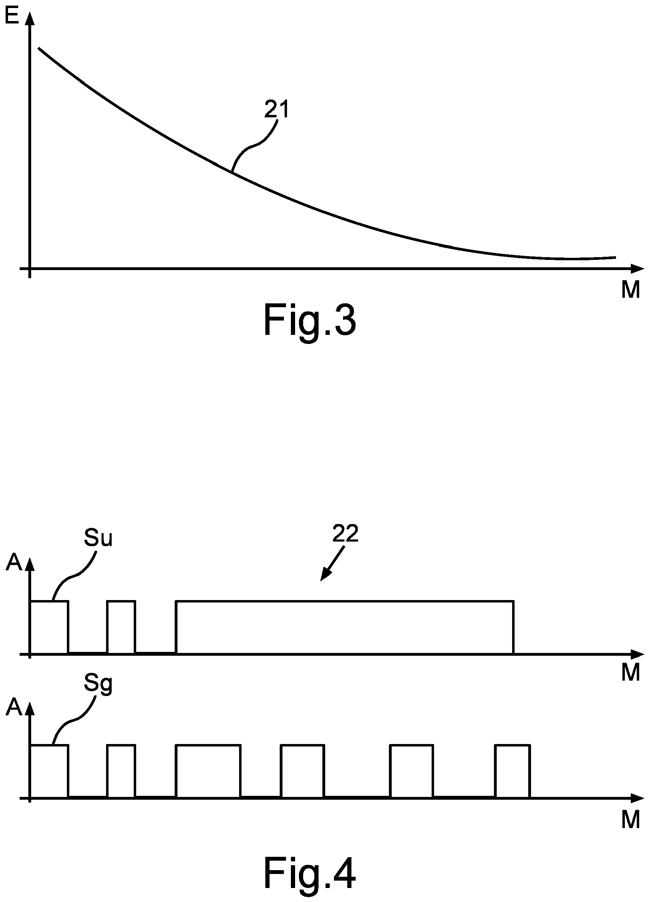

Fig. 3 zeigt einen Graphen, welcher die Empfindlichkeit des Ultraschallsensors 13 in Abhängigkeit von der Menge M des Wassers 17, die auf die Radlaufverkleidung 12 trifft, beschreibt. Dabei beschreibt die Kurve 21 den Verlauf der Empfindlichkeit E in Abhängigkeit von der Menge M des Wassers. Hierbei ist zu erkennen, dass die Empfindlichkeit E mit zunehmender Menge M reduziert wird. Die Empfindlichkeit E des Ultraschallsensors 13 kann beispielsweise dadurch eingestellt werden, dass ein entsprechender Schwellwert vorgegeben wird. Dabei werden nur Signalanteile des Sensorsignals berücksichtigt, welche über dem Schwellenwert liegen. Beispielsweise kann zunächst ein geringer Schwellenwert vorgegeben werden. Dies ermöglicht das Erfassen von einzelnen Tropfen des Wassers 17, die auf die Radlaufverkleidung 12 treffen. Somit kann bereits eine geringe Menge M von Wasser 17, die sich auf der Fahrbahn 18 befindet, erfasst werden. Wenn die Amplitude des Sensorsignals zunimmt, kann der Schwellenwert erhöht werden. Somit wird also die Empfindlichkeit E des Ultraschallsensors 13 verringert. Somit kann Wasser 17, welches in Form von Spritzwasser auf die Radlaufverkleidung 12 trifft, erfasst werden.

Durch die Anpassung der Empfindlichkeit E des Ultraschallsensors 13 kann situationsabhängig das Vorhandensein von Wasser 17 auf der Oberfläche der Fahrbahn 18 erkannt werden. Insbesondere kann verhindert werden, dass ein Verstärker des Ultraschallsensors 13 in Sättigung geht. Dies ist anhand von Fig. 4 erläutert. Dabei zeigt der obere Graph ein ungeregeltes Sensorsignal Su in Abhängigkeit von der Menge M des Wassers 17, das auf die Radlaufverkleidung 12 trifft. Wenn die Menge M zunimmt, kann nicht mehr zwischen einem Wechsel eines Zustands, bei dem Wasser 17 auf die Radlaufverkleidung 12 trifft, und einem Zustand, bei dem kein Wasser 17 auf die Radlaufverkleidung 12 trifft, unterschieden werden. In einem Bereich 22 geht der Verstärker des Ultraschallsensors 13 in Sättigung.

Im Vergleich hierzu zeigt der untere Graph in Fig. 4 ein geregeltes Sensorsignal Sg, bei dem die Empfindlichkeit E des Ultraschallsensors 13 in Abhängigkeit von der Menge M des Wassers 17, das auf die Radlaufverkleidung 12 trifft, angepasst wird. Insbesondere wird die Empfindlichkeit E des Ultraschallsensors 13 gemäß dem Graphen von Fig. 3 angepasst. Hier ist zu erkennen, dass auch bei zunehmender Menge M des Wassers 17 ein Wechsel zwischen den Zuständen erkannt werden kann. Mit der Sensoranordnung 8 kann somit mit Hilfe eines handelsüblichen Ultraschallsensors 13 der Zustand einer Fahrbahn 18 erkannt werden. Insbesondere kann erkannt werden, ob und welche Menge M von Wasser 17 sich auf der Fahrbahn 18 befindet.

## Patentansprüche

1. Sensoranordnung (8) zum Erkennen eines Zustands einer Fahrbahn (18), mit einer Radlaufverkleidung (12) eines Kraftfahrzeugs (1) und mit einer Sensoreinrichtung (10), welche dazu ausgelegt ist, während einer Fahrt des Kraftfahrzeugs (1) auf der Fahrbahn (18) ein Auftreffen von Wasser (17) auf die Radlaufverkleidung (12) des Kraftfahrzeugs (1) zu erfassen, und mit einer Steuereinrichtung (3) zum Erkennen des Zustands der Fahrbahn (18) anhand des mittels der Sensoreinrichtung (10) erfassten Auftreffen des Wassers (17),
wobei die Sensoreinrichtung (10) einen Ultraschallsensor (13) umfasst, welcher dazu ausgelegt ist, ein Ultraschallsignal zu empfangen und **dadurch gekennzeichnet, dass** der Ultraschallsensor (13) zudem dazu ausgelegt ist, das Auftreffen des Wassers (17) auf die Radlaufverkleidung (12) zu erfassen, wobei der Ultraschallsensor (13) derart angeordnet ist, dass das auf die Radlaufverkleidung (12) auftreffende Wasser (17) eine mechanische Schwingung einer Membran (14) des Ultraschallsensors (13) bewirkt, wobei der Ultraschallsensor (13) derart in oder an der Radverkleidung (12) angeordnet ist, dass mechanische Schwingungen von der Radlaufverkleidung (12) durch Körperschall an die Membran (14) des Ultraschallsensors (13) übertragen werden, wobei wenn Wasser bei der Fahrt des Kraftfahrzeugs (1) von der Fahrbahnoberfläche auf die Radlaufverkleidung (12) geschleudert wird, die Radlaufverkleidung (12) in mechanische Schwingungen versetzt wird und wobei die Steuereinrichtung (3) dazu ausgelegt ist, den Ultraschallsensor (13) zum Erfassen des auf die Radlaufverkleidung (12) auftreffenden Wassers (17) in einem Empfangsmodus zu betreiben, in welchem ein Wandlerelement (16) des Ultraschallsensors (13) die mechanischen Schwingungen der Membran (14) des Ultraschallsensors (13) bestimmt.

2. Sensoranordnung (8) nach Anspruch 1,
**dadurch gekennzeichnet, dass**
die Membran (14) des Ultraschallsensors (13) zumindest teilweise aus einem Metall gebildet ist.

3. Sensoranordnung (8) nach einem der vorhergehenden Ansprüche,
**dadurch gekennzeichnet, dass**
der Ultraschallsensor (13) auf einer einem Rad (9) des Kraftfahrzeugs (1) abgewandten Seite (20) der Radlaufverkleidung (12) angeordnet ist.

4. Sensoranordnung (8) nach einem der Ansprüche 1 bis 2,
**dadurch gekennzeichnet, dass**
die Radlaufverkleidung (12) eine Durchgangsöffnung aufweist und der Ultraschallsensor (13) zumindest bereichsweise innerhalb der Durchgangsöffnung angeordnet ist.

5. Sensoranordnung (8) nach Anspruch 1,
**dadurch gekennzeichnet, dass**
das Wandlerelement (16) dazu ausgelegt ist, ein Sensorsignal bereitzustellen, welches die Schwingung der Membran (14) beschreibt, und die Steuereinrichtung (3) dazu ausgelegt ist, das Sensorsignal zum Bestimmen des Zustands der Fahrbahn (18) in einem Frequenzbereich zwischen 2 und 5 kHz und/oder in einem Frequenzbereich einer Resonanzfrequenz der Membran (14) zu überprüfen.

6. Sensoranordnung (8) nach einem der vorhergehenden Ansprüche,
**dadurch gekennzeichnet, dass**
die Steuereinrichtung (3) dazu ausgelegt ist, eine Menge (M) des auf die Radlaufverkleidung (12) auftreffenden Wassers (17) zu bestimmen und eine Empfindlichkeit (E) des Ultraschallsensors (13) in Abhängigkeit von der bestimmten Menge (M) anzupassen.

7. Sensoranordnung (8) nach Anspruch 6,
**dadurch gekennzeichnet, dass**
die Steuereinrichtung (3) dazu ausgelegt ist, die Empfindlichkeit (E) des Ultraschallsensors (13) mit zunehmender Menge (M) des Wassers (17) zu verringern.

8. Fahrerassistenzsystem (2) für ein Kraftfahrzeug (1) mit einer Sensoranordnung (8) nach einem der vorhergehenden Ansprüche.

9. Fahrerassistenzsystem (2) nach Anspruch 8,
**dadurch gekennzeichnet, dass**
das Fahrerassistenzsystem (2) zumindest einen weiteren Ultraschallsensor (4) aufweist, welcher dazu ausgelegt ist, ein Objekt in einem Umgebungsbereich (7) des Kraftfahrzeugs (1) zu erfassen.

10. Fahrerassistenzsystem (2) nach Anspruch 9,
**dadurch gekennzeichnet, dass**
die Steuereinrichtung (3) der Sensoranordnung (8) mit dem zumindest einen weiteren Ultraschallsensor (4) zur Datenübertragung verbunden ist.

11. Fahrerassistenzsystem (2) nach einem der Ansprüche 8 bis 10,
**dadurch gekennzeichnet, dass**
das Fahrerassistenzsystem (2) dazu ausgelegt ist, eine Informationsschnittstelle zu einem Fahrer des Kraftfahrzeugs (1) anzusteuern und/oder eine Geschwindigkeit des Kraftfahrzeugs (1) in Abhängigkeit von dem mit der Sensoranordnung (8) erfassten Zustand der Fahrbahn (18) anzupassen.

12. Kraftfahrzeug (1) mit einem Fahrerassistenzsystem (2) nach einem der Ansprüche 8 bis 11.

13. Verfahren zum Erkennen eines Zustands einer Fahrbahn (18), bei welchem mittels einer Sensoreinrichtung (10) während einer Fahrt eines Kraftfahrzeugs (1) auf der Fahrbahn (18) ein Auftreffen von Wasser (17) auf eine Radlaufverkleidung (12) des Kraftfahrzeugs (1) erfasst wird und mittels einer Steuereinrichtung (3) der Zustand der Fahrbahn (18) anhand des mittels der Sensoreinrichtung (10) erfassten Auftreffen des Wassers (17) erkannt wird,
wobei die Sensoreinrichtung (10) einen Ultraschallsensor (13) umfasst, welcher dazu ausgelegt ist, ein Ultraschallsignal auszusenden und das von einem Objekt reflektierte Ultraschallsignal zu empfangen,
**dadurch gekennzeichnet, dass**
das Auftreffen des Wassers (17) auf die Radlaufverkleidung (12) mit dem Ultraschallsensor (13) erfasst wird, wobei der Ultraschallsensor (13) derart angeordnet ist, dass das auf die Radlaufverkleidung (12) auftreffende Wasser (17) eine mechanische Schwingung einer Membran (14) des Ultraschallsensors (13) bewirkt, wobei der Ultraschallsensor (13) derart in oder an der Radverkleidung (12) angeordnet ist, dass mechanische Schwingungen von der Radlaufverkleidung (12) durch Körperschall an die Membran (14) des Ultraschallsensors (13) übertragen werden, wobei wenn Wasser bei der Fahrt des Kraftfahrzeugs (1) von der Fahrbahnoberfläche auf die Radlaufverkleidung (12) geschleudert wird, die Radlaufverkleidung (12) in mechanische Schwingungen versetzt wird und wobei die Steuereinrichtung (3) dazu ausgelegt ist, den Ultraschallsensor (13) zum Erfassen des auf die Radlaufverkleidung (12) auftreffenden Wassers (17) in einem Empfangsmodus zu betreiben, in welchem ein Wandlerelement (16) des Ultraschallsensors (13) die mechanischen Schwingungen der Membran (14) des Ultraschallsensors (13) bestimmt.

## Claims

1. Sensor assembly (8) for recognizing a state of a roadway (18) including a wheel arch lining (12) of a motor vehicle (1), and including a sensor device (10), which is adapted to capture an impact of water (17) on the wheel arch lining (12) of the motor vehicle (1) during a travel of the motor vehicle (1) on the roadway (18), and including a control device (3) for recognizing the state of the roadway (18) based on the impact of the water (17) captured by means of the sensor device (10),
wherein the sensor device (10) includes an ultrasonic sensor (13), which is adapted to receive an ultrasonic signal, and **characterized in that** the ultrasonic sensor is additionally adapted to capture the impact of the water (17) on the wheel arch lining (12), wherein the ultrasonic sensor (13) is disposed such that the water (17) impacting on the wheel arch lining (12) causes a mechanical oscillation of a membrane (14) of the ultrasonic sensor (13), wherein the ultrasonic sensor (13) is disposed in or at the wheel arch lining (12) such that mechanical oscillations are transmitted from the wheel arch lining to the membrane of the ultrasonic sensor (13) by structure-borne sound, wherein if the water is projected from the roadway surface to the wheel arch lining (12) in the travel of the motor vehicle (1), the wheel arch lining (12) is mechanically oscillated, and wherein the control device (3) is adapted to operate the ultrasonic sensor (13) in a receiving mode for capturing the water (17) impacting on the wheel arch lining (12), in which a transducer element (16) of the ultrasonic sensor (13) determines the mechanical oscillations of the membrane (14) of the ultrasonic sensor (13).

2. Sensor assembly (8) according to claim 1,
**characterized in that**
the membrane (14) of the ultrasonic sensor (13) is at least partially formed of a metal.

3. Sensor assembly (8) according to any one of the preceding claims,
**characterized in that**
the ultrasonic sensor (13) is disposed on a side (20) of the wheel arch lining (12) facing away from a wheel (9) of the motor vehicle (1).

4. Sensor assembly (8) according to any one of claims 1 to 2,
**characterized in that**
the wheel arch lining (12) comprises a passage opening and the ultrasonic sensor (13) is disposed within the passage opening at least in certain areas.

5. Sensor assembly (8) according to claim 1,
**characterized in that**
the transducer element (16) is adapted to provide a sensor signal, which describes the oscillation of the membrane (14), and the control device (3) is adapted to examine the sensor signal in a frequency range between 2 and 5 kHz and/or in a frequency range of a resonant frequency of the membrane (14) for determining the state of the roadway (18).

6. Sensor assembly (8) according to any one of the preceding claims,
**characterized in that**
the control device (3) is adapted to determine an amount (M) of the water (17) impacting on the wheel arch lining (12) and to adapt a sensitivity (E) of the ultrasonic sensor (13) depending on the determined amount (M).

7. Sensor assembly (8) according to claim 6,
**characterized in that**
the control device (3) is adapted to reduce the sensitivity (E) of the ultrasonic sensor (13) with increasing amount (M) of the water (17).

8. Driver assistance system (2) for a motor vehicle (1) with a sensor assembly (8) according to any one of the preceding claims.

9. Driver assistance system (2) according to claim 8,
**characterized in that**
the driver assistance system (2) comprises at least one further ultrasonic sensor (4), which is adapted to capture an object in an environmental region (7) of the motor vehicle (1).

10. Driver assistance system (2) according to claim 9,
**characterized in that**
the control device (3) of the sensor assembly (8) is connected to the at least one further ultrasonic sensor (4) for data transfer.

11. Driver assistance system (2) according to any one of claims 8 to 10,
**characterized in that**
the driver assistance system (2) is adapted to control an information interface to a driver of the motor vehicle (1) and/or to adapt a speed of the motor vehicle (1) depending on the state of the roadway (18) captured by the sensor assembly (8).

12. Motor vehicle (1) with a driver assistance system (2) according to any one of claims 8 to 11.

13. Method for recognizing a state of a roadway (18), in which an impact of water (17) on a wheel arch lining (12) of a motor vehicle (1) is captured by means of a sensor device (10) during a travel of the motor vehicle (1) on the roadway (18) and the state of the roadway (18) is recognized by means of a control device (3) based on the impact of the water (17) captured by means of the sensor device (10),
wherein the sensor device (10) includes an ultrasonic sensor (13), which is adapted to emit an ultrasonic signal and to receive the ultrasonic signal reflected from an object, **characterized in that**
the impact of the water (17) on the wheel arch lining (12) is captured by the ultrasonic sensor (13), wherein the ultrasonic sensor (13) is disposed such that the water (17) impacting on the wheel arch lining (12) causes a mechanical oscillation of a membrane (14) of the ultrasonic sensor (13), wherein the ultrasonic sensor (13) is disposed in or at the wheel arch lining (12) such that mechanical oscillations are transmitted from the wheel arch lining (12) to the membrane of the ultrasonic sensor (13) by structure-borne sound, wherein if the water is projected from the roadway surface to the wheel arch lining (12) in the travel of the motor vehicle (1), the wheel arch lining (12) is mechanically oscillated, and wherein the control device (3) is adapted to operate the ultrasonic sensor (13) in a receiving mode for capturing the water (17) impacting on the wheel arch lining (12), in which a transducer element (16) of the ultrasonic sensor (13) determines the mechanical oscillations of the membrane (14) of the ultrasonic sensor (13).

## Revendications

1. Agencement de capteurs (8), destiné à détecter un état d'une chaussée (18), avec une garniture de passage de roue (12) d'un véhicule (1) et avec un dispositif capteur (10), lequel est conçu pour détecter, pendant un parcours du véhicule (1) sur la chaussée (18), un impact d'eau (17) sur la garniture de passage de roue (12) du véhicule (1) et avec un dispositif de commande (3), destiné à détecter l'état de la chaussée (18) à l'aide de l'impact de l'eau (17), détecté au moyen du dispositif capteur (10),
le dispositif capteur (10) comprenant un capteur à ultrasons (13), lequel est conçu pour recevoir un signal ultrasonore et
**caractérisé en ce que**
le capteur à ultrasons est conçu de plus pour détecter l'impact de l'eau (17) sur la garniture de passage de roue (12),
le capteur à ultrasons (13) étant agencé de telle sorte que l'eau (17), qui frappe la garniture de passage de roue (12), occasionne une vibration mécanique d'une membrane (14) du capteur à ultrasons (13),
le capteur à ultrasons (13) étant agencé dans ou sur la garniture de passage de roue (12) de telle sorte que les vibrations mécaniques de la garniture de passage de roue (12) sont transmises à la membrane (14) du capteur à ultrasons (13) par le biais d'un bruit de choc,
la garniture de passage de roue (12) vibrant mécaniquement, lorsque de l'eau est projetée, lors du parcours du véhicule (1) de la surface de la chaussée sur la garniture de passage de roue (12) et
le dispositif de commande (3) étant conçu pour exploiter le capteur à ultrasons (13), destiné à détecter l'eau (17), qui frappe la garniture de passage de roue (12), en mode réception, dans lequel un élément transducteur (16) du capteur à ultrasons (13) détermine les vibrations mécaniques de la membrane (14) du capteur à ultrasons (13).

2. Agencement de capteurs (8) selon la revendication 1,
**caractérisé en ce que**
la membrane (14) du capteur à ultrasons (13) est composée au moins en partie d'un métal.

3. Agencement de capteurs (8) selon l'une des revendications précédentes,
**caractérisé en ce que**
le capteur à ultrasons (13) est agencé sur une face (20) de la garniture de passage de roue (12), éloignée d'une roue (9) du véhicule (1).

4. Agencement de capteurs (8) selon l'une des revendications 1 à 2,
**caractérisé en ce que**
la garniture de passage de roue (12) présente une ouverture de passage et le capteur à ultrasons (13) est agencé au moins par zones à l'intérieur de l'ouverture de passage.

5. Agencement de capteurs (8) selon la revendication 1,
**caractérisé en ce que**
l'élément transducteur (16) est conçu pour mettre à disposition un signal du capteur, lequel décrit la vibration de la membrane (14) et le dispositif de commande (3) est conçu pour examiner le signal du capteur, destiné à déterminer l'état de la chaussée (18) dans une gamme de fréquences entre 2 et 5 kHz et / ou dans une gamme de fréquence d'une fréquence de résonance de la membrane (14).

6. Agencement de capteurs (8) selon l'une des revendications précédentes,
**caractérisé en ce que**
le dispositif de commande (3) est conçu pour déterminer une quantité (M) de l'eau (17), qui frappe la garniture de passage de roue (12) et pour adapter une sensibilité (E) du capteur à ultrasons (13) en fonction de la quantité (M) déterminée.

7. Agencement de capteurs (8) selon la revendication 6,
**caractérisé en ce que**
le dispositif de commande (3) est conçu pour réduire la sensibilité (E) du capteur à ultrasons (13) avec une quantité (M) croissante de l'eau (17).

8. Système d'assistance à conducteur (2) pour un véhicule (1), avec un agencement de capteurs (8) selon l'une des revendications précédentes.

9. Système d'assistance à conducteur (2) selon la revendication 8,
**caractérisé en ce que**
le système d'assistance à conducteur (2) présente au moins un autre capteur à ultrasons (4), lequel est conçu pour détecter un objet dans une zone environnante (7) du véhicule (1).

10. Système d'assistance à conducteur (2) selon la revendication 9,
**caractérisé en ce que**
le dispositif de commande (3) de l'agencement de capteurs (8) est relié au au moins un autre capteur à ultrasons (4) en vue de la transmission de données.

11. Système d'assistance à conducteur (2) selon l'une des revendications 8 à 10,
**caractérisé en ce que**
le système d'assistance à conducteur (2) est conçu pour générer une interface d'information relative à un conducteur du véhicule (1) et / ou adapter une vitesse du véhicule (1) en fonction de l'état de la chaussée (18), détecté avec l'agencement de capteurs (8).

12. Véhicule (1) avec un système d'assistance à conducteur (2) selon l'une des revendications 8 à 11.

13. Procédé destiné à détecter un état d'une chaussée (18), pour lequel un impact d'eau (17) sur une garniture de passage de roue (12) du véhicule (1) est détecté au moyen d'un dispositif capteur (10) pendant un parcours d'un véhicule (1) sur la chaussée (18) et l'état de la chaussée (18) est détecté au moyen d'un dispositif de commande (3), à l'aide du choc de l'eau (17), détecté au moyen du dispositif de capteurs (10),
le dispositif capteur (10) comprenant un capteur à ultrasons (13), lequel est conçu pour émettre un signal ultrasonore et pour recevoir un signal ultrasonore réfléchi par un objet,
**caractérisé en ce que**
l'impact de l'eau (17) sur la garniture de passage de roue (12) est détecté avec le capteur à ultrasons (13),
le capteur à ultrasons (13) étant conçu de telle sorte que l'eau (17), qui frappe la garniture de passage de roue (12), occasionne une vibration mécanique d'une membrane (14) du capteur à ultrasons (13),
le capteur à ultrasons (13) étant agencé dans ou sur la garniture de passage de roue (12) de telle sorte que des vibrations mécaniques sont transmises par la garniture de passage de roue (12) à la membrane (14) du capteur à ultrasons (13) par le biais d'un bruit de choc,
moyennant quoi, lorsque de l'eau est projetée, lors du parcours du véhicule (1), de la surface de la chaussée sur la garniture de passage de roue (12), la garniture de passage de roue (12) vibre mécaniquement et
moyennant quoi le dispositif de commande (3) est conçu pour exploiter le capteur à ultrasons (13), destiné à détecter l'eau (17), qui frappe la garniture de passage de roue (12), en mode réception, dans lequel un élément transducteur (16) du capteur à ultrasons (13) détermine les vibrations mécaniques de la membrane (14) du capteur à ultrasons (13).
